# EUROPEAN PATENT APPLICATION

(11) **EP 4 039 664 A1**
(43) Date of publication of application: **10.08.2022**
(21) Application number: 20872826.1
(22) Date of filing: 25.08.2020
(51) Int. Cl.: C04B 35/622, C04B 35/453, E04F 13/16

(54) **PLANT STRUCTURE, AND BUILDING MEMBER AND INTERIOR MEMBER USING SAME**

(30) Priority: 30.09.2019 JP 2019178379
(71) Applicant: Panasonic Intellectual Property Management Co., Ltd., Osaka-shi, Osaka 540-6207 (JP)
(72) Inventor: SATO Natsuki, Osaka-shi, Osaka 540-6207 (JP); KURIZOE Naoki, Osaka-shi, Osaka 540-6207 (JP); SINGH Brahm Pal, Osaka-shi, Osaka 540-6207 (JP); OSHIO Shozo, Osaka-shi, Osaka 540-6207 (JP)
(74) Representative: Müller-Boré & Partner Patentanwälte PartG mbB
(86) International application number: PCT/JP2020/032035
(87) International publication number: WO 2021/065252

(57) **Abstract**

A plant structure (100, 100A, 100B, 100C) includes a ceramic member (10) including at least one of an oxide or an oxide hydroxide as a main component and substantially including no hydrate, and a plant-derived substance (20) directly fixed to the ceramic member (10) without interposing an adhesive substance different from a ceramic material making up the ceramic member (10). A building member and an interior member each include the plant structure.

## Description

### TECHNICAL FIELD

The present invention relates to a plant structure, and a building member and an interior member using the same.

### BACKGROUND ART

Woody cement boards have been used as building members, such as exterior wall materials. The woody cement board is a material obtained by mixing a woody raw material, such as a wood chip or wood wool, with cement and compressing and molding it into a plate shape. The woody cement board is a board material that combines heat insulation, moisture control, and lightness derived from wood with fire resistance derived from cement.

Patent Literature 1 discloses a decorative excelsior board as a board material lighter than a woody cement board. Specifically, Patent Literature 1 discloses a decorative excelsior board formed by combining wood wool, using a binder with a magnesium oxide as a main component, to form a wood wool board and attaching, to the wood wool board, a decorative layer of an inorganic hardened body with a magnesium oxide as a main component. Due to the use of the binder with a magnesium oxide as a main component, which is lighter than cement and has excellent adhesiveness to a woody material, the decorative excelsior board is characterized by excellent heat insulation and fire resistance while being reduced in weight.

### CITATION LIST

### PATENT LITERATURE

Patent Literature 1: Japanese Unexamined Patent Application Publication No. S58-76249

### SUMMARY OF INVENTION

However, since the cement used for the woody cement board and the hardened body using the binder with a magnesium oxide as a main component described in Patent Literature 1 are formed by hydration reaction, there are many pores, and the mechanical strength of the obtained board material may be insufficient.

The present invention has been made in consideration of such issues as described above, which is inherent in related art. An object of the present invention is to provide a plant structure having excellent mechanical strength while including a plant-derived substance, and a building member and an interior member each using the plant structure.

To solve the above issue, a plant structure according to a first aspect of the present invention includes: a ceramic member including at least one of an oxide or an oxide hydroxide as a main component and substantially including no hydrate, and a plant-derived substance directly fixed to the ceramic member without interposing an adhesive substance different from a ceramic material making up the ceramic member.

A building member according to a second aspect of the present invention includes the above-described plant structure.

An interior member according to a third aspect of the present invention includes the above-described plant structure.

### BRIEF DESCRIPTION OF DRAWINGS

[Fig. 1] Fig. 1 is a schematic sectional view of an example of a plant structure according to a present embodiment.
[Fig. 2] Fig. 2(a) is an enlarged schematic sectional view of the plant structure in Fig. 1. Fig. 2(b) is a schematic sectional view of a vicinity of grain boundaries of a particle group of a ceramic material.
[Fig. 3] Fig. 3 is a schematic sectional view of another example of the plant structure according to the present embodiment.
[Fig. 4] Fig. 4 is a schematic sectional view of another example of the plant structure according to the present embodiment.
[Fig. 5] Fig. 5 is a schematic sectional view of another example of the plant structure according to the present embodiment.
[Fig. 6] Fig. 6(a) is a diagram illustrating a secondary electron image at position 1 in a test sample according to an example. Fig. 6(b) is a diagram illustrating binarized data of the secondary electron image at position 1 in the test sample according to the example.
[Fig. 7] Fig. 7(a) is a diagram illustrating a secondary electron image at position 2 in the test sample according to the example. Fig. 7(b) is a diagram illustrating binarized data of the secondary electron image at position 2 in the test sample according to the example.
[Fig. 8] Fig. 8(a) is a diagram illustrating a secondary electron image at position 3 in the test sample according to the example. Fig. 8(b) is a diagram illustrating binarized data of the secondary electron image at position 3 in the test sample according to the example.

### DESCRIPTION OF EMBODIMENTS

Referring to the drawings, a description is given below of a plant structure according to a present embodiment, and a building member and an interior member each using the plant structure. Note that dimensional ratios in the drawings are exaggerated for convenience of explanation and are sometimes different from actual ratios.

### [Plant structure]

The plant structure according to the present embodiment includes a ceramic member 10 and a plant-derived substance 20 directly fixed to the ceramic member 10 without interposing an adhesive substance different from a ceramic material making up the ceramic member 10.

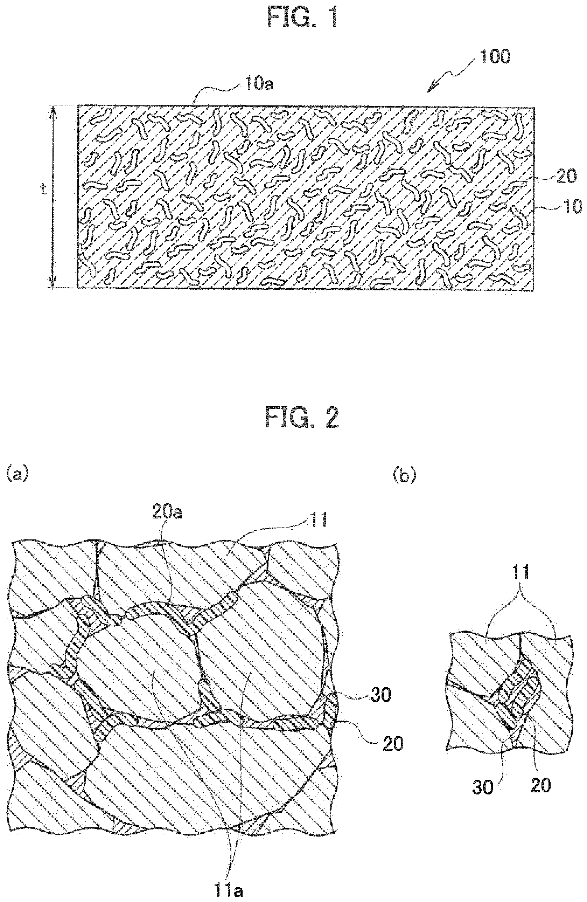

Specifically, the plant structure 100 illustrated in Fig. 1 includes the ceramic member 10 and the plant-derived substance 20 directly fixed to the ceramic member 10 in a dispersed state within the ceramic member 10. As illustrated in Fig. 2, the ceramic member 10 includes multiple particles 11 made from the ceramic material, and the particles 11 of the ceramic material bond with each other to form the ceramic member 10.

Preferably, the ceramic material making up the ceramic member 10 contains at least one metal element selected from the group consisting of an alkali metal, an alkaline earth metal, a transition metal, a base metal, and a semimetal. In this description, the alkaline earth metal includes beryllium and magnesium in addition to calcium, strontium, barium, and radium. The base metal includes aluminum, zinc, gallium, cadmium, indium, tin, mercury, thallium, lead, bismuth, and polonium. The semimetal includes boron, silicon, germanium, arsenic, antimony, and tellurium. Among these, preferably, the ceramic material contains at least one metal element selected from the group consisting of zinc, aluminum, and magnesium. As described later, the ceramic material containing the metal element described above easily forms a connection part derived from the ceramic material by a pressure heating method.

Preferably, the ceramic material contains at least one of an oxide or an oxide hydroxide of the above-described metal element, as a main component. That is, preferably, the ceramic material contains at least one of an oxide or an oxide hydroxide of the above-described metal element in an amount of 50 mol% or more, more preferably, in an amount of 80 mol% or more. Note that the oxide of the above-described metal element includes a phosphate, a silicate, an aluminate, and a borate in addition to a compound in which only oxygen is bonded to the metal element. Such a ceramic material has high stability against oxygen and water vapor in the atmosphere. Accordingly, dispersing the plant-derived substance 20 inside the ceramic member 10 prevents the plant-derived substance 20 from contacting with oxygen and water vapor and thus prevents plant-derived substance 20 from deteriorating.

Particularly preferably, the ceramic material making up the ceramic member 10 is an oxide. When the ceramic material is made from an oxide of the above-described metal element, the plant structure 100 with higher durability is obtained. Note that, preferably, the oxide of the metal element is a compound in which only oxygen is bonded to the metal element.

Preferably, the ceramic material making up the ceramic member 10 is a polycrystalline substance. That is, preferably, the particles 11 of the ceramic material are crystalline particles, and preferably, the ceramic member 10 is formed by aggregating a large number of particles 11. When the ceramic material making up the ceramic member 10 is a polycrystalline substance, the plant structure 100 with higher durability is obtained compared to the case of the ceramic material made from an amorphous substance. Note that, more preferably, the particles 11 of the ceramic material are crystalline particles containing at least one metal element selected from the group consisting of an alkali metal, an alkaline earth metal, a transition metal, a base metal, and a semimetal. Preferably, the particles 11 of the ceramic material are crystalline particles containing at least one of an oxide or an oxide hydroxide of the above-described metal element. More preferably, the particles 11 of the ceramic material are crystalline particles containing at least one of an oxide or an oxide hydroxide of the above-described metal element, as a main component.

Note that preferably, the ceramic material making up the ceramic member 10 is boehmite. Boehmite is an aluminum oxide hydroxide represented by a composition formula of AlOOH. Boehmite is insoluble in water and hardly reacts with acids and alkalis at room temperature, having high chemical stability. Boehmite also has excellent heat resistance due to its high dehydration temperature of around 500 °C. Since boehmite has the specific gravity of about 3.07, when the ceramic member 10 is made from boehmite, the plant structure 100 that is lightweight and excellent in chemical stability is obtained.

When the ceramic material making up the ceramic member 10 is boehmite, the particles 11 may be particles only of a boehmite phase, or particles of a mixed phase of boehmite, and an aluminum oxide or an aluminum hydroxide other than boehmite. For example, the particles 11 may be a mixture of a phase of boehmite and a phase of gibbsite (Al(OH)₃).

Preferably, the ceramic material making up the ceramic member 10 has antibacterial properties. In this case, the antibacterial effect of the ceramic member 10 prevents mold or the like from growing in the plant-derived substance 20, thereby providing the plant structure 100 with hygienic considerations. Preferably, the ceramic material having such antibacterial properties is an inorganic compound containing at least one selected from the group consisting of silver, zinc, and copper. More preferably, the antibacterial ceramic material is a zinc oxide.

As described above, more preferably, the ceramic material making up the ceramic member 10 contains at least one of an oxide or an oxide hydroxide as a main component. Thus, preferably, the ceramic member 10 also contains at least one of an oxide or an oxide hydroxide as a main component. That is, preferably, the ceramic member 10 contains at least one of the oxide or the oxide hydroxide in an amount of 50 mol% or more, more preferably, in amount of 80 mol% or more. However, preferably, the ceramic member 10 substantially contains no hydrate. In this description, "a ceramic member substantially contains no hydrate" means that the ceramic member 10 does not intentionally contain a hydrate. Thus, when a hydrate is mixed into the ceramic member 10 as an unavoidable impurity, the condition of "a ceramic member substantially contains no hydrate" is satisfied. Note that since boehmite is an oxyhydroxide, it is not included in the hydrate in this description.

Preferably, the ceramic material making up the ceramic member 10 does not contain a hydrate of a calcium compound. The calcium compound here is tricalcium silicate (alite, 3CaO·SiO₂), dicalcium silicate (belite, 2CaO·SiO₂), calcium aluminate (3CaO·Al₂O₃), calcium aluminoferrite (4CaO·Al₂O₃·Fe₂O₃), or calcium sulfate (CaSO₄·2H₂O). When the ceramic material making up the ceramic member 10 contains a hydrate of the above-described calcium compound, the obtained plant structure may have a porosity exceeding 20% in the section of the ceramic material, thereby having reduced strength. Thus, preferably, the ceramic material does not contain the hydrate of the above-described calcium compound. Preferably, the ceramic material making up the ceramic member 10 does not contain phosphate cement, zinc phosphate cement, and calcium phosphate cement. When the ceramic material does not contain these cements, the porosity in the section of the ceramic member decreases, which enhances its mechanical strength.

The average particle size of the particles 11 of the ceramic material making up the ceramic member 10 is not limited. However, the average particle size of the particles 11 is preferably 300 nm or more and 50 µm or less, more preferably 300 nm or more and 30 µm or less, still more preferably 300 nm or more and 10 µm or less, particularly preferably 300 nm or more and 5 µm or less. When the average particle size of the particles 11 of the ceramic material is within this range, the particles 11 firmly bond with each other, increasing the strength of the ceramic member 10. When the average particle size of the particles 11 of the ceramic material is within this range, the ratio of pores present inside the ceramic member 10 is 20% or less, which prevents the deterioration of the plant-derived substance 20, as described later. In this description, the value of "average particle size" is, unless otherwise stated, a value calculated as an average value of particle size of particles observed in several to several tens of visual fields by using observation means, such as a scanning electron microscope (SEM) or a transmission electron microscope (TEM).

The shape of the particles 11 of the ceramic material is not limited but may have a spherical shape, for example. The particles 11 may have a whisker shape (acicular shape) or a scale shape. The particles having a whisker shape or the particles having a scale shape have higher contact with other particles compared to the spherical particles, which easily improves the strength of the ceramic member 10. Therefore, using particles of such a shape for the particles 11 enhances the strength of the entire plant structure 100. As the particles 11, which have a whisker shape, for example, particles containing at least one of a zinc oxide (ZnO) or an aluminum oxide (Al₂O₃) are usable.

As described above, preferably, the ceramic member 10 includes a group of particles of a ceramic material in the plant structure 100. That is, preferably, the ceramic member 10 includes the multiple particles 11 made from the ceramic material, and the particles 11 of the ceramic material bond with each other to form the ceramic member 10. In this case, the particles 11 may be in point contact with each other, or in surface contact with each other by particle surfaces of the particles 11. Preferably, the plant-derived substance 20 is present in an approximately uniformly dispersed state inside the ceramic member 10. However, preferably, the plant-derived substance 20 is present at grain boundaries of the particles 11 of the ceramic material. As illustrated in Fig. 2, by unevenly distributing the plant-derived substance 20 among adjacent particles 11 of the ceramic material, the plant-derived substance 20 deforms to fill gaps among the particles 11 of the ceramic material. This enables the ratio of pores present within the ceramic member 10 to be further reduced.

When the ceramic member 10 includes the group of particles of the ceramic material in the plant structure 100, the plant-derived substance 20 may be present among adjacent particles 11 of the ceramic material. However, as illustrated in Fig. 2, in addition to the plant-derived substance 20, there may be an amorphous part 30 containing an amorphous inorganic compound among the adjacent particles 11 of the ceramic material. The presence of the amorphous part 30 allows the adjacent particles 11 of the ceramic material to bond with each other via the amorphous part 30, further increasing the strength of the ceramic member 10. Note that preferably, the amorphous part 30 is present to contact at least surfaces of the particles 11 of the ceramic material. The amorphous part 30 may be present between the particles 11 of the ceramic material and the plant-derived substance 20 and among the adjacent plant-derived substance 20 in addition to among the adjacent particles 11 of the ceramic material.

Preferably, the amorphous part 30 contains an amorphous inorganic compound. Specifically, the amorphous part 30 may be a part made from only the amorphous inorganic compound or a mixture of the amorphous inorganic compound and a crystalline inorganic compound. The amorphous part 30 may be a part in which the crystalline inorganic compound is dispersed inside the amorphous inorganic compound.

Preferably, the particles 11 of the ceramic material and the amorphous part 30 contain the same metal element, and preferably, the metal element is at least one selected from the group consisting of an alkali metal, an alkaline earth metal, a transition metal, a base metal, and a semimetal. That is, preferably, the inorganic compound making up the particles 11 and the amorphous inorganic compound making up the amorphous part 30 contain at least the same metal element. The inorganic compound making up the particles 11 and the amorphous inorganic compound making up the amorphous part 30 may have the same chemical composition or may have different chemical compositions. Specifically, when the metal element is zinc, the inorganic compound making up the particles 11 and the amorphous inorganic compound making up the amorphous part 30 may both be a zinc oxide (ZnO). Alternatively, while the inorganic compound making up the particles 11 is ZnO, the amorphous inorganic compound making up the amorphous part 30 may be a zinc-containing oxide other than ZnO.

When the amorphous part 30 is a part in which the amorphous inorganic compound and the crystalline inorganic compound are mixed, the amorphous inorganic compound and the crystalline inorganic compound may have the same chemical composition or may have different chemical compositions from each other.

In the plant structure 100, preferably, the particles 11 and the amorphous part 30 contain an oxide of at least one metal element selected from the group consisting of an alkali metal, an alkaline earth metal, a transition metal, a base metal, and a semimetal. Since the oxide of such a metal element has high durability, contact of the plant-derived substance 20 with oxygen and water vapor is prevented for a long time, and deterioration of the plant-derived substance 20 is prevented.

Preferably, the oxide of the metal element contained in both the particles 11 and the amorphous part 30 is at least one selected from the group consisting of a zinc oxide, a magnesium oxide, and a composite of a zinc oxide and a magnesium oxide. As is described later, by using the oxide of the metal element described above, the amorphous part 30 is formed by a simple method.

As described above, the ceramic material making up the ceramic member 10 may be boehmite. In this case, the particles 11 of the ceramic member 10 may be particles only of a boehmite phase, or particles of a mixed phase of boehmite, and an aluminum oxide or an aluminum hydroxide other than boehmite. In this case, preferably, the adjacent particles 11 are bonded through at least one of an oxide or an oxide hydroxide of aluminum. That is, preferably, the particles 11 are not bonded by an organic binder of an organic compound and are not also bonded by an inorganic binder of an inorganic compound except for an oxide and an oxide hydroxide of aluminum. Note that when the adjacent particles 11 are bonded through at least one of an oxide or an oxide hydroxide of aluminum, the oxide and the oxide hydroxide of aluminum may be crystalline, or amorphous.

When the ceramic member 10 is made from boehmite, the presence ratio of the boehmite phase is preferably 50% by mass or more, more preferably 60% by mass or more, still more preferably 70% by mass or more. By increasing the ratio of the boehmite phase, the ceramic member 10 that is lightweight and excellent in chemical stability and heat resistance is obtained. Note that the ratio of the boehmite phase in the ceramic member 10 is obtained by measuring the X-ray diffraction pattern of the ceramic member 10 by an X-ray diffraction method and then performing a Rietveld analysis.

Preferably, the plant structure 100 has the porosity of 20% or less in the section of the ceramic member 10. That is, when the section of the ceramic member 10 is observed, preferably, the average value of the ratio of pores per unit area of the ceramic member 10 is 20% or less. When the porosity is 20% or less, the plant-derived substance 20 is sealed inside the dense ceramic material. Thus, the ratio of the plant-derived substance 20 contacting with oxygen and water vapor from the outside of the plant structure 100 decreases, which prevents the corrosion of the plant-derived substance 20 and maintains properties of the plant-derived substance 20 for a long time. When the porosity is 20% or less, it is easy to make the surface of the ceramic member 10 smooth, which provides the plant structure 100 excellent in design properties, such as a glossy surface.

Note that the ceramic member 10 has the porosity of preferably 15% or less, more preferably 10% or less, further more preferably 5% or less, in the cross section thereof. The smaller the porosity in the cross section of the ceramic member 10, the more the contact of the plant-derived substance 20 with oxygen and water vapor is prevented, which prevents the plant-derived substance 20 from deteriorating.

In this description, the porosity is determined as follows. First, the section of the ceramic member 10 is observed to discriminate the ceramic member 10, the plant-derived substance 20, and the pores. Then, the unit area of the ceramic member 10 and the area of pores in that unit area are measured to obtain the ratio of pores per unit area. After the ratio of pores per unit area is obtained at multiple locations, the average value of the ratio of pores per unit area is taken as the porosity. Note that when the section of the ceramic member 10 is observed, an optical microscope, a scanning electron microscope (SEM), or a transmission electron microscope (TEM) is usable. The unit area and the area of pores in that unit area may be measured by binarizing an image observed with a microscope.

In the plant structure 100, the plant-derived substance 20 is made from a plant and includes a plant cut to a desired size and an extract from a plant, for example. In the present embodiment, preferably, the plant-derived substance 20 is at least one selected from the group consisting of a wood chip, wood wool, bark, sawdust, a branch, a root, a leaf, a vein, grass, a flower, a seed, a natural resin, a natural pigment, and amber. The above-described plant-derived substance 20 is easy to obtain and handle, which makes the plant structure 100 suitable for industrial production.

In the plant structure 100 illustrated in Figs. 1 and 2, the plant-derived substance 20 is dispersed inside the ceramic member 10. This makes it possible to obtain a plant structure that did not exist before because the ceramic member 10 and the plant-derived substance 20 are mixed together. Since the ceramic material has high stability against oxygen and water vapor in the atmosphere, dispersing the plant-derived substance 20 inside the ceramic member 10 prevents the plant-derived substance 20 from contacting with oxygen and water vapor and thus prevents the plant-derived substance 20 from deteriorating.

In the plant structure 100, the size of the plant-derived substance 20 is not limited. However, in the plant structure 100, preferably, the ceramic member 10 has multiple particles 11 of a ceramic material, and the plant-derived substance 20 has a size capable of at least straddling multiple particles 11. Specifically, as illustrated in Fig. 2, preferably, a plant-derived substance 20a has a size capable of straddling two adjacent particles 11a. Preferably, the plant-derived substance 20a has a size capable of covering multiple particles 11. In this case, the plant-derived substance 20a adhered to the adjacent particles 11a acts to prevent the ceramic member 10 from getting damaged. Thus, the plant structure 100 becomes a structure resistant to impact.

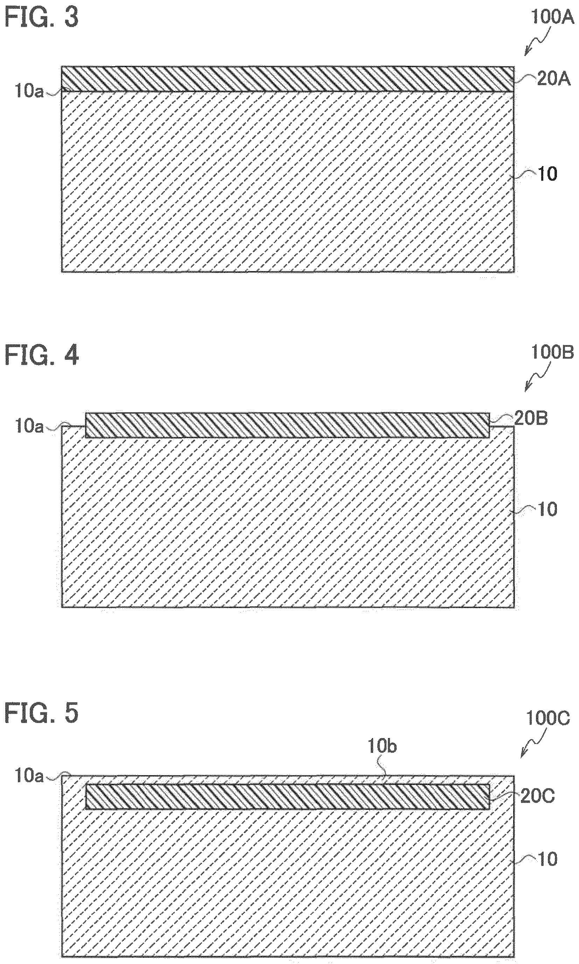

In the plant structure according to the present embodiment, the plant-derived substance 20 may be miniaturized and dispersed throughout the inside of the ceramic member 10, as illustrated in Figs. 1 and 2. However, the shape and arrangement of the plant-derived substance 20 is not limited to the embodiment in Figs. 1 and 2. For example, as illustrated in Figs. 3 to 5, the plant-derived substance may have a plate shape.

A plant structure 100A illustrated in Fig. 3 includes the ceramic member 10 and a plant-derived substance 20A directly fixed to a surface 10a of the ceramic member 10 without interposing an adhesive substance different from the ceramic material making up the ceramic member 10. A plant structure 100B illustrated in Fig. 4 includes the ceramic member 10 and a plant-derived substance 20B that is partially buried in and directly fixed to the ceramic member 10 without interposing an adhesive substance different from the ceramic material making up the ceramic member 10. A plant structure 100C illustrated in Fig. 5 includes the ceramic member 10 and a plant-derived substance 20C that is all buried in and directly fixed to the ceramic member 10 without interposing an adhesive substance different from the ceramic material making up the ceramic member 10.

In the present embodiment, preferably, at least a part of the plant-derived substance is buried in the ceramic member 10. Specifically, as illustrated in Fig. 4, preferably, a part of the plant-derived substance 20B in a plate shape is buried through the surface 10a of the ceramic member 10 to the inside thereof. In this case, the plant-derived substance 20B that is relatively inexpensive is replaced with a part of the ceramic member 10, and thus the plant structure is easily reduced in cost and made suitable for industrial production.

In the present embodiment, also preferably, the entire plant-derived substance is buried inside the ceramic member 10. Specifically, as illustrated in Fig. 5, preferably, all of the plant-derived substance 20C in a plate shape is buried inside the ceramic member 10. In this case, the plant structure does not expose the plant-derived substance, which is easily damaged, vulnerable to fire and heat, and susceptible to change in quality and corrosion, to the outside, and thus the structure becomes strong and long-lasting.

In the present embodiment, also preferably, the plant-derived substance is arranged to be visually confirmable from the outside of the plant structure. For example, in the plant structure 100A, 100B in Figs. 3, 4, the plant-derived substance 20A, 20B in a plate shape is visually confirmable from the outside of the plant structure. Also, in the plant structure 100C illustrated in Fig. 5, when a layer 10b between the surface 10a of the ceramic member 10 and the plant-derived substance 20C is thin, the plant-derived substance 20C is visually confirmable from the outside of the plant structure. In this case, a pattern, a color, and a shape of the plant-derived substance are recognizable, and thus the plant structure is easily designed for a decoration utilizing a pattern, a color, and a shape and for a design full of natural feeling.

As illustrated in Figs. 3 and 4, also preferably, at least a part of the plant-derived substance according to the present embodiment is exposed to the outside. In this case, the plant-derived substance itself is directly visually confirmable, and thus the plant structure becomes one in which a pattern, a color, and a shape of the plant-derived substance are directly enjoyable. Since it is possible to color the plant-derived substance, the plant structure becomes one in which the plant-derived substance is colored later according to the application or preference.

When the plant-derived substance is arranged to be visually confirmable from the outside of the plant structure, preferably, the plant-derived substance is arranged to take at least one form selected from the group consisting of a letter, a pictograph, a symbol, a code, and a pattern. In this case, the plant structure is easily asserted, transmitted, identified, or decorated, using letters, pictographs, or the like.

As described above, the plant structure 100, 100A, 100B, 100C according to the present embodiment includes the ceramic member 10 that contains at least one of an oxide or an oxide hydroxide as a main component and substantially contains no hydrate. The plant structure further includes the plant-derived substance 20 directly fixed to the ceramic member 10 without interposing an adhesive substance different from the ceramic material making up the ceramic member 10.

The plant structure according to the present embodiment is made from the ceramic member 10 and the plant-derived substance 20 that are orthodox and have a relatively small environmental load and thus becomes a simple structure that is gentle to the natural world and humans and has never been before. Since the structure is made using a ceramic material excellent in durability, heat resistance, fire resistance, and chemical resistance, the structure also hardly deteriorates, changes in quality, and burns, over a long period of time in spite of including the plant-derived substance 20. Since the structure is made using the plant-derived substance 20 that is lightweight, it is easy to make the structure lighter in spite of including the ceramic member 10. Since the plant structure according to the present embodiment uses the ceramic member 10 that contains at least one of an oxide or an oxide hydroxide as a main component and substantially contains no hydrate, the structure is excellent in mechanical strength while including the plant-derived substance 20.

In the plant structure 100, 100A, 100B, 100C, preferably, the porosity in the cross section of the ceramic member 10 is 20% or less. Thus, in the case of the plant structure 100 illustrated in Fig. 1, the contact ratio of oxygen and water vapor with the plant-derived substance 20 decreases, which makes it possible to prevent the plant-derived substance 20 from being oxidized and decomposed and to maintain the stability of the plant structure 100 over a long period of time. Since the ceramic member 10 has few internal pores, and the ceramic material is dense, the plant structure 100 has high strength.

In the plant structure 100, 100A, 100B, 100C, preferably, the ceramic member 10 has a volume ratio larger than that of the plant-derived substance 20. Increasing the volume ratio of the ceramic member 10 makes it easier to cover the periphery of the plant-derived substance 20 with the particles 11 of the ceramic material in the case of the plant structure 100 illustrated in Fig. 1. Thus, from the viewpoint of further preventing the plant-derived substance 20 from deteriorating, preferably, the ceramic member 10 has a volume ratio larger than that of the plant-derived substance 20.

The shape of the plant structure 100, 100A, 100B, 100C is not limited but may be a plate shape, for example. A thickness t of the plant structure is not limited but may be 50 µm or more, for example. As described later, the plant structure is formed by a pressure heating method. It is thus easy to obtain a plant structure having a large thickness. Note that the thickness t of the plant structure may be 1 mm or more. The thickness t of the plant structure may be 1 cm or more. The upper limit of the thickness t of the plant structure is not limited but may be 50 cm, for example.

### [Method for manufacturing plant structure]

Next, a method for manufacturing a plant structure according to the present embodiment is described. The plant structure is manufactured by pressurizing and heating a mixture of particles of the ceramic material and the plant-derived substance 20 in a state including a solvent. By using such a pressure heating method, particles of the ceramic material bond with each other to form the ceramic member 10.

Specifically, first, a powder of the ceramic material and the plant-derived substance 20 are mixed to prepare a mixture. The method for mixing the powder of the ceramic material and the plant-derived substance 20 is not limited and may be performed by a dry or wet process. The powder of the ceramic material and the plant-derived substance 20 may be mixed in air or in an inert atmosphere.

Preferably, the powder of the ceramic material here has an average particle size D₅₀ within a range of 300 nm to 50 µm. Such a ceramic material is not only easy to handle but also has a relatively large specific surface area, so that the contact area among particles increases when the mixture is pressurized. This acts to enhance the bonding force among particles of the ceramic material and improves the densification of the ceramic member 10.

Next, a solvent is added to the mixture. The solvent is not limited, but for example, one dissolving a part of the ceramic material when the mixture is pressurized and heated is usable. As the solvent, one reacting with the ceramic material to form another ceramic material different from said ceramic material is usable. As such a solvent, at least one selected from the group consisting of an acidic aqueous solution, an alkaline aqueous solution, water, an alcohol, a ketone, and an ester is usable. As the acidic aqueous solution, an aqueous solution with a pH of 1 to 3 is usable. As the alkaline aqueous solution, an aqueous solution with a pH of 10 to 14 is usable. As the acidic aqueous solution, preferably, an aqueous solution of an organic acid is used. As the alcohol, preferably, an alcohol with 1 to 12 carbon atoms is used.

The mixture containing the ceramic material, the plant-derived substance 20, and the solvent is then filled inside the mold. After the mixture is filled in the mold, the mold may be heated as necessary. Then, by applying pressure to the mixture inside the mold, the inside of the mold becomes a high pressure state. At this time, the ceramic material and the plant-derived substance 20 are densified, and at the same time, particles of the ceramic material bond with each other.

When a solvent that dissolves a part of a ceramic material is used, an inorganic compound making up the ceramic material is dissolved in the solvent under high pressure. The dissolved inorganic compound penetrates a gap between the ceramic material and the plant-derived substance 20, a gap among the ceramic material, and a gap among the plant-derived substance 20. Then, the solvent in the mixture is removed in this state to form a connection part derived from the ceramic material between the ceramic material and the plant-derived substance 20, among the ceramic material, and among the plant-derived substance 20. When a solvent that reacts with a ceramic material to form another ceramic material different from said ceramic material is used, an inorganic compound making up the ceramic material reacts with the solvent under high pressure. Then, the other ceramic material generated by the reaction is filled in the gap between the ceramic material and the plant-derived substance 20, the gap among the ceramic material, and the gap among the plant-derived substance 20 to form a connection part derived from the other ceramic material.

When a solvent that dissolves a part of a ceramic material is used, heating and pressurizing conditions of the mixture containing the ceramic material, the plant-derived substance 20, and the solvent are not limited as long as the conditions are such that dissolution of the surface of the ceramic material progresses. When a solvent that reacts with a ceramic material to form another ceramic material different from said ceramic material is used, heating and pressurizing conditions of the mixture are not limited as long as the reaction between the ceramic material and the solvent proceeds. For example, preferably, the mixture containing the ceramic material, the plant-derived substance 20, and the solvent is heated to 50 to 300 °C and then pressurized at a pressure of 10 to 600 MPa. Note that the temperature at which the mixture containing the ceramic material, the plant-derived substance 20, and the solvent is heated is more preferably 80 to 250°C, still more preferably 100 to 200°C. The pressure at which the mixture containing the ceramic material, the plant-derived substance 20, and the solvent is pressurized is more preferably 50 to 400 MPa, still more preferably 50 to 200 MPa. Limiting the heating temperature to such a numerical range prevents the plant-derived substance from changing in quality and disappearing and provides a desired plant structure in which the ceramic member and the plant-derived substance are combined. Limiting the pressure to such a numerical range provides a plant structure that is dense and has internal strain prevented.

Then, by taking out the molded body from the inside of the mold, the plant structure is obtained. Note that, preferably, the connection part derived from the ceramic material formed between the ceramic material and the plant-derived substance 20, among the ceramic material, and among the plant-derived substance 20 is the amorphous part 30 described above.

As a method for manufacturing an inorganic member made from a ceramic, a sintering method has been known. The sintering method is a method for obtaining a sintered body by heating an aggregate of a solid powder made from a ceramic material at a temperature lower than the melting point. However, in the sintering method, the solid powder is heated to 1000 °C or higher, for example. Therefore, when the sintering method is used to obtain a plant structure made from the ceramic material and the plant-derived substance, the plant-derived substance carbonizes due to heating at a high temperature, obtaining no plant structure. However, in the manufacturing method for the plant structure according to the present embodiment, the mixture formed by mixing the powder of the ceramic material and the plant-derived substance 20 is heated at a low temperature of 300 °C or less, and thus the plant-derived substance 20 hardly carbonizes. Thus, the plant-derived substance 20 is directly fixed to the ceramic member 10 made from the ceramic material.

Further, in the manufacturing method according to the present embodiment, since the mixture of the powder of the ceramic material and the plant-derived substance 20 is pressurized while being heated, the ceramic material is aggregated to form the ceramic member 10 that is dense. As a result, the number of pores inside the ceramic member 10 is reduced, and thus the plant structure 100 is obtained that has high strength.

Next, a method for manufacturing the plant structure 100 is described in which the ceramic material making up the ceramic member 10 is boehmite. The plant structure 100 in which the ceramic material is boehmite is produced by mixing a hydraulic alumina, the plant-derived substance 20, and a solvent containing water, and then pressurizing and heating the mixture. The hydraulic alumina is an oxide obtained by heat-treating an aluminum hydroxide and contains ρ alumina. Such a hydraulic alumina has the property of bonding and curing by hydration reaction. Therefore, by using the pressure heating method, the hydration reaction of the hydraulic alumina progresses to have particles of the hydraulic alumina bonded to each other while the crystal structure is changed to boehmite, so that the ceramic member 10 is formed.

Specifically, a powder of the hydraulic alumina, the plant-derived substance 20, and a solvent containing water are first mixed to prepare a mixture. Preferably, the solvent containing water is pure water or ion exchange water. However, the solvent containing water may contain an acidic substance or an alkaline substance, in addition to water. As long as the solvent containing water contains water as a main component, the solvent containing water may contain, for example, an organic solvent (for example, an alcohol).

Preferably, the amount of the solvent added to the hydraulic alumina is an amount in which the hydration reaction of the hydraulic alumina sufficiently progresses. The amount of the solvent added is preferably 20 to 200% by mass to the hydraulic alumina, more preferably 50 to 150% by mass to the hydraulic alumina.

Next, the mixture formed by mixing the hydraulic alumina, the plant-derived substance 20, and the solvent containing water is filled inside the mold. After the mixture is filled in the mold, the mold may be heated as necessary. By applying pressure to the mixture inside the mold, the inside of the mold becomes a high pressure state. At this time, the hydraulic alumina becomes highly filled, and particles of the hydraulic alumina bond with each other, resulting in high density. Specifically, by adding water to the hydraulic alumina, the hydraulic alumina undergoes a hydration reaction to form boehmite and an aluminum hydroxide on the surface of particles of the hydraulic alumina. By pressurizing the mixture in the mold while heating, the boehmite and the aluminum hydroxide generated mutually diffuse among adjacent hydraulic alumina particles, so that the hydraulic alumina particles gradually bond with each other. Then, the dehydration reaction proceeds by heating, and the crystal structure changes from the aluminum hydroxide to boehmite. It is supposed that the hydration reaction of the hydraulic alumina, the mutual diffusion among the hydraulic alumina particles, and the dehydration reaction proceed almost simultaneously.

When the molded body is taken out from the inside of the mold, the plant structure 100 is obtained in which the particles 11 bond with each other via at least one of the oxide or the oxide hydroxide of aluminum while the plant-derived substance 20 is fixed.

Heating and pressurizing conditions of the mixture formed by mixing the hydraulic alumina, the plant-derived substance 20, and the solvent containing water are not limited as long as the reaction between the hydraulic alumina and the solvent progresses. For example, preferably, the mixture formed by mixing the hydraulic alumina, the plant-derived substance 20, and the solvent containing water is pressurized at a pressure of 10 to 600 MPa while being heated to 50 to 300 °C. Note that the temperature at which the mixture formed by mixing the hydraulic alumina, the plant-derived substance 20, and the solvent containing water is heated is more preferably 80 to 250 °C, still more preferably 100 to 200 °C. The pressure at which the mixture formed by mixing the hydraulic alumina, the plant-derived substance 20, and the solvent containing water is pressurized is more preferably 50 to 600 MPa, still more preferably 200 to 600 MPa.

As described above, the method for manufacturing the plant structure includes: a step of mixing the powder of the ceramic material with the plant-derived substance 20 to obtain a mixture; and a step of adding a solvent dissolving a ceramic material or a solvent reacting with the ceramic material to the mixture, and then pressurizing and heating the mixture. Preferably, heating and pressurizing conditions of the mixture are a temperature of 50 to 300 °C and a pressure of 10 to 600 MPa. In the manufacturing method according to the present embodiment, since the plant structure 100 is formed under such a low temperature condition, carbonization of the plant-derived substance 20 is prevented, and thus the plant-derived substance 20 is directly fixed to the ceramic member.

The method for manufacturing the plant structure 100 in which the ceramic material is boehmite includes: a step of mixing the hydraulic alumina, the plant-derived substance 20, and the solvent containing water to obtain the mixture; and a step of pressurizing and heating the mixture. Preferably, heating and pressurizing conditions of the mixture are a temperature of 50 to 300 °C and a pressure of 10 to 600 MPa. In this manufacturing method, the plant structure 100 is formed under such a low temperature condition, and thus the obtained member is mainly made from boehmite phase. Therefore, the plant structure 100 that is lightweight and excellent in chemical stability is obtained by a simple method.

### [Plant structure usage]

Next, the usage of the plant structure according to the present embodiment is described. As described above, the plant structure 100, 100A, 100B, 100C is formable as a plate shape having a large thickness and thus is usable for a structural object. That is, the plant structure is made from the ceramic member 10 and the plant-derived substance 20 having a relatively small environmental load and thus is a simple structure gentle to the natural world and humans. Moreover, the plant structure is a novel structure having the advantages of the ceramic member 10 that is excellent in durability, heat resistance, fire resistance, and chemical resistance, and the advantages of the plant-derived substance 20 that is lightweight and comfortable. Thus, using the plant structure as a structural object is expected to create a new demand, which could not be achieved by the structure made from petroleum-derived members and components, the structure made only of ceramic materials, and the structure made only of plant-derived substances.

Preferably, a structural object including the plant structure according to the present embodiment is a housing facility, a housing member, an ornament, a building material, or a building. The housing facility, the housing member, the ornament, the building material, and the building are structural objects that are in high demand in human life, and thus using the plant structure in structural objects is expected to have creation effects of a new large market.

The plant structure according to the present embodiment is usable for a building member. In other words, the building member according to the present embodiment includes the plant structure 100, 100A, 100B, 100C. The building member is a member manufactured for building, and the plant structure 100,100A, 100B, 100C is usable at least in part in the present embodiment. As described above, the plant structure is formable in a plate shape having a large thickness and is excellent in design properties in addition to high strength and durability. Therefore, the plant structure is suitably usable as a building member. Examples of the building member include an outer wall material (siding) and a roof material. Examples of the building member also include a road material and an outer groove material.

The plant structure according to the present embodiment is usable as an interior member. In other words, the interior member according to the present embodiment includes the plant structure 100, 100A, 100B, 100C. Examples of the interior member include a bathtub, a kitchen counter, a washstand, and a floor material.

As described above, the plant structure according to the present embodiment has a high degree of design quality due to the plant-derived substance 20 and thus is usable for ornaments. The plant structure according to the present embodiment is also usable in a decorating method for decorating an object to be decorated using the plant structure. As described above, the plant structure is a novel structure that is simple and gentle to the natural world and humans. Also in the modern society, decorations have become indispensable items to enrich our lives. Therefore, using the plant structure according to the present embodiment makes it possible to encourage the creation of new ornaments.

### EXAMPLES

The plant structure according to the present embodiment is described in more detail with reference to an example below, but the present embodiment is not limited thereto.

### [Preparation of test sample]

White zinc oxide particles having an average particle size D₅₀ of about 1 µm (manufactured by Kojundo Chemical Laboratory Co.,Ltd., purity 99.99%) were prepared as the inorganic particles (ceramic material). As the plant-derived substance, maple wood was used.

Next, 0.78 g of inorganic particles and pieces of wood were put into a cylindrical mold (ϕ10) having an internal space. Further, 150 µL of 1M acetic acid was added to the inside of the mold. The inorganic particles and pieces of wood including the acetic acid were heated and pressurized under the condition of 100 MPa, 150 °C, and 30 minutes to obtain a test sample according to this example in which the pieces of wood were buried inside. The test sample according to this example had a high hardness, such as a sintered body.

### [Evaluation of test sample]

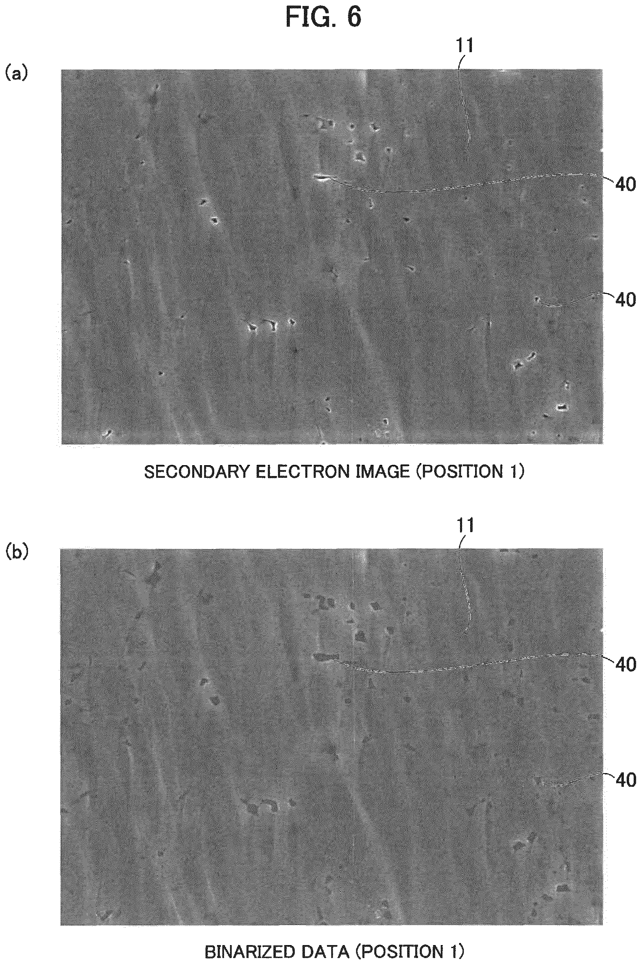

First, cross section polisher processing (CP processing) was applied to the section of the ceramic member in the test sample, which is cylindrical. Next, using a scanning electron microscope (SEM), a secondary electron image was observed at a magnification of 20,000 on the section of the ceramic member in the test sample. Figs. 6(a), 7(a), and 8(a) illustrate secondary electron images obtained by observing three points (positions 1 to 3) in the section of the ceramic member in the test sample. In the observed secondary electron images, a gray portion indicates the zinc oxide (particles 11 of ceramic material), and a black portion indicates pores 40.

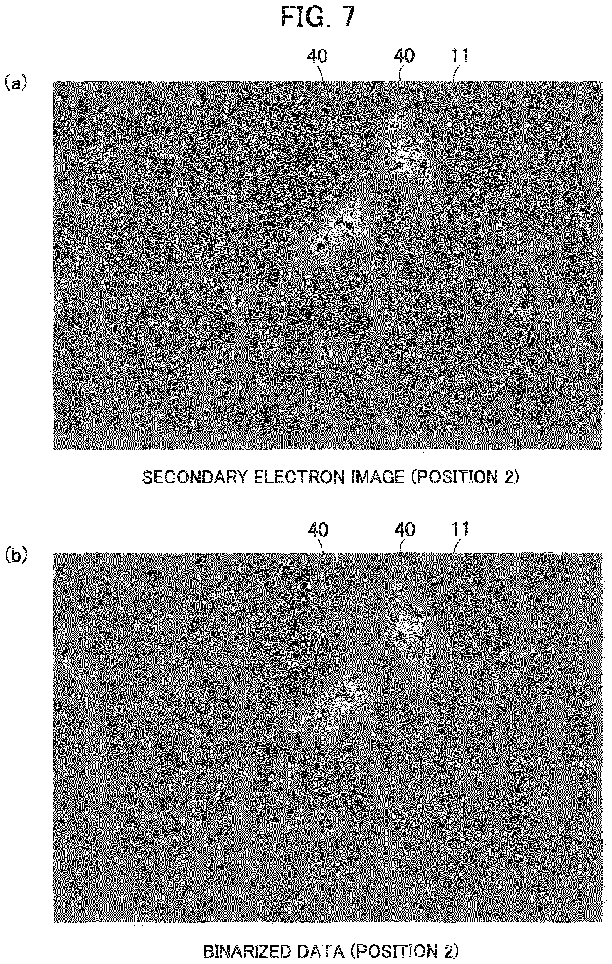

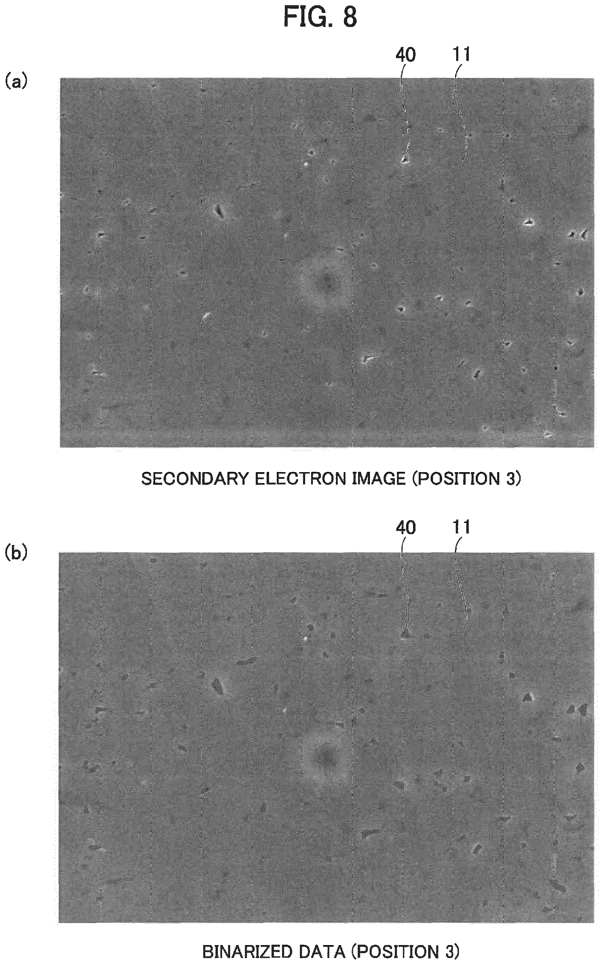

Next, by filling the pore portions and binarizing the SEM images of the three fields, the pore portions were clarified. The binarized images of the secondary electron images of Figs. 6(a), 7(a), and 8(a) are illustrated in Figs. 6(b), 7(b), and 8(b), respectively. Then, the area ratio of the pore portion was calculated from the binarized images, and the average value was taken as the porosity. Specifically, in Fig. 6(b), the area ratio of the pore portion at position 1 was 4.5%. In Fig. 7(b), the area ratio of the pore portion at position 2 was 2.9%. In Fig. 8(b), the area ratio of the pore portion at position 3 was 2.5%. Therefore, the porosity of the ceramic member in the test sample manufactured this time was 3.3%, which is the average value of the area ratio of the pore portion at positions 1 to 3.

As described above, the porosity of the ceramic member in the test sample is less than 10%, which indicates that the ceramic member is dense and has excellent mechanical strength. It also indicates that the plant-derived substance arranged within the ceramic member is prevented from contacting with air and water vapor, thus preventing oxidative deterioration.

Although the contents according to the present embodiment have been described above with reference to the example, it is obvious to those skilled in the art that the present embodiment is not limited to these descriptions and that various modifications and improvements are possible.

The entire contents of Japanese Patent Application No. 2019-178379 (filed on: September 30, 2019) are incorporated herein by reference.

### INDUSTRIAL APPLICABILITY

According to the present disclosure, there is provided a plant structure having excellent mechanical strength while including a plant-derived substance, and a building member and an interior member each using the plant structure.

### REFERENCE SIGNS LIST

- 10: Ceramic member
- 20, 20a, 20A, 20B, 20C: Plant-derived substance
- 100, 100A, 100B, 100C: Plant structure

## Claims

1. A plant structure comprising:
a ceramic member including at least one of an oxide or an oxide hydroxide as a main component and substantially including no hydrate; and
a plant-derived substance directly fixed to the ceramic member without interposing an adhesive substance different from a ceramic material making up the ceramic member.

2. The plant structure according to claim 1, wherein the ceramic member has a porosity of 20% or less in a cross section thereof.

3. The plant structure according to claim 1 or 2, wherein at least a part of the plant-derived substance is buried within the ceramic member.

4. The plant structure according to any one of claims 1 to 3, wherein a whole of the plant-derived substance is buried within the ceramic member.

5. The plant structure according to any one of claims 1 to 4, wherein the plant-derived substance is arranged to be visually confirmable from an outside of the plant structure.

6. The plant structure according to any one of claims 1 to 3, wherein at least a part of the plant-derived substance is exposed outside.

7. The plant structure according to claim 5 or 6, wherein the plant-derived substance is arranged to take at least one form selected from the group consisting of a letter, a pictograph, a symbol, a code, and a pattern.

8. The plant structure according to any one of claims 1 to 4, wherein the plant-derived substance is dispersed within the ceramic member.

9. The plant structure according to any one of claims 1 to 8, wherein the plant-derived substance is at least one selected from the group consisting of a wood chip, wood wool, bark, sawdust, a branch, a root, a leaf, a vein, grass, a flower, a seed, a natural resin, a natural pigment, and amber.

10. The plant structure according to any one of claims 1 to 9, wherein the ceramic material making up the ceramic member has antibacterial properties.

11. A building member comprising:
the plant structure according to any one of claims 1 to 10.

12. An interior member comprising:
the plant structure according to any one of claims 1 to 10.
